(19) **Europäisches Patentamt**

**European Patent Office**

**Office européen des brevets**

(11) **EP 1 306 824 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(51) Int Cl.⁷: **G08G 1/04**, G06T 5/00, G06T 7/00

(21) Anmeldenummer: **01125142.8**

(22) Anmeldetag: **23.10.2001**

(54) **Verfahren zur Erfassung eines sich auf einer Fahrbahn, insbesondere einer Autobahn bewegenden Fahrzeugs sowie zur Ermittlung fahrzeugspezifischer Daten**

Method for detecting a vehicle moving on a roadway, in particular on a motorway, and for determing vehicle specific data

Procédé pour détecter un véhicule avancant sur une route, en particulière sur une autoroute, et pour déterminer des données spécifiques au véhicule

(84) Benannte Vertragsstaaten:
**AT BE CH CY DE DK ES FI FR GB GR IE IT LI LU MC NL PT SE TR**

(43) Veröffentlichungstag der Anmeldung:
**02.05.2003 Patentblatt 2003/18**

(73) Patentinhaber: **SIEMENS AKTIENGESELLSCHAFT**
**80333 München (DE)**

(72) Erfinder: **Keymeulen, Jozef**
**9308 Hofstade/Aalst (BE)**

(56) Entgegenhaltungen:
DE-A- 19 517 031          US-A- 5 402 118
US-A- 5 847 755

- **FATHY M ET AL: "A WINDOW-BASED EDGE DETECTION TECHNIQUE FOR MEASURING ROAD TRAFFIC PARAMETERS IN REAL-TIME" REAL-TIME IMAGING, ACADEMIC PRESS LIMITED, GB, Bd. 1, Nr. 4, 1. Oktober 1995 (1995-10-01), Seiten 297-305, XP000541455 ISSN: 1077-2014**
- **PATENT ABSTRACTS OF JAPAN vol. 1996, no. 05, 31. Mai 1996 (1996-05-31) & JP 08 016976 A (TOYOTA MOTOR CORP), 19. Januar 1996 (1996-01-19)**
- **PATENT ABSTRACTS OF JAPAN vol. 1998, no. 12, 31. Oktober 1998 (1998-10-31) & JP 10 187974 A (MATSUSHITA ELECTRIC IND CO LTD), 21. Juli 1998 (1998-07-21)**

**Beschreibung**

Die Erfindung betrifft ein Verfahren zur Erfassung eines sich auf einer Fahrbahn, insbesondere einer Autobahn bewegenden Fahrzeugs sowie zur Ermittlung fahrzeugspezifischer Daten.

Die Erfassung von Fahrzeugen insbesondere auf Autobahnen spielt im Rahmen moderner Verkehrsdatenerfassung und Verkehrsleittechnik eine immer wichtigere Rolle. Anhand der Erfassungsdaten ist es möglich, die aktuelle Verkehrsdichte zu bestimmen, um anhand dieser Informationen beispielsweise Verkehrsleitsysteme entsprechend steuern zu können. Eine wichtige Information ist auch die tatsächlich gefahrene Geschwindigkeit eines Fahrzeugs im überwachten Fahrbahnabschnitt, da anhand dieser Geschwindigkeitsinformationen beispielsweise überprüft werden kann, ob angegebene Geschwindigkeitsbegrenzungen eingehalten werden und wie das Verhalten der Verkehrsteilnehmer allgemein auf dem überwachten Fahrbahnabschnitt ist. Eine ähnlich wichtige fahrzeugspezifische Information ist die.Länge eines Fahrzeugs, da anhand dieser Informationen ermittelt werden kann, welche Fahrzeuge bevorzugt zu welcher Zeit den überwachten Streckenabschnitt passieren, ob es sich also beispielsweise vermehrt um PKW oder LKW handelt.

Bekannt ist es, zur Erfassung dieser Daten im Boden verlegte einfache oder doppelte Induktionsschleifen zu verwenden, jedoch liefern diese Schleifen nur stark fehlerbehaftete Ergebnisse. Häufig besteht auch das Problem, dass Fahrzeuge, die sich zwischen den Fahrbahnen bewegen, die also beispielsweise die Fahrbahn wechseln, nicht oder doppelt gezählt werden. Vor allem zur Erfassung der Geschwindigkeit ist es natürlich auch bekannt, Radarmessungen durchzuführen, wobei diese Messungen häufig aber nicht fahrbahnselektiv sind und vor allem ihre Grenzen bei starkem Regen und Hagel haben, wenn also die Witterung die Verwendung des Radarsystems ausschließt oder wenn feste Fahrbahnwände, wie sie häufig als Schallschutzwände installiert werden, vorhanden sind.

Ein Verfahren, bei dem Bilder eines Fahrbahnausschnitts aufgenommen werden, ist beispielweise aus der DE195 17031 A1 bekannt.

Der Erfindung liegt damit die Aufgabe zugrunde, ein Verfahren anzugeben, das auf einfache und sichere Weise die Erfassung eines Fahrzeugs und die Ermittlung relevanter fahrzeugspezifischer Daten zulässt.

Erfindungsgemäß wird diese Aufgabe durch ein Verfahren nach Anspruch 1 und durch ein System nach Anspruch 16 gelöst.

Zur Lösung ist ein Verfahren vorgesehen, umfassen folgende Schritte:

- Aufnahme mehrerer zeitbezogener, aufeinander folgender Bilder eines Fahrbahnausschnitts, die jeweils den selben begrenzten Fahrbahnausschnitt zeigen, mittels einer Bildaufnahmeeinrichtung aus einer Richtung senkrecht zur Fahrbahn,
- Auswahl derjenigen Bilder, in denen die Vorderkante und/oder die Hinterkante eines Fahrzeugs gezeigt ist, wobei so viele Bilder ausgewählt werden, dass die Vorderkante und/oder die Hinterkante wenigstens zweimal in den Bildern abgebildet ist,
- Ermittlung bildbezogener Positionsdaten der Vorderkante und/oder der Hinterkante anhand der jeweiligen Bilder, und
- Ermittlung der Geschwindigkeit des Fahrzeugs und/oder der Länge des Fahrzeugs anhand der Positionsdaten der Vorderkante oder der Hinterkante sowie der zeitbezogenen Daten der verwendeten Bilder.

Das erfindungsgemäße Verfahren sieht die Aufnahme möglichst vieler aufeinanderfolgender Bilder pro Zeiteinheit eines fest in seiner Länge definierten Fahrbahnabschnitts vor, wobei die Ermittlung der fahrzeugspezifischen Daten, nämlich der Geschwindigkeit und/oder der Länge eines Fahrzeugs basierend auf diesen Bildaufnahmen erfolgt. Die Bilder sollten mit einer möglichst hohen Bildaufnahmerate, vorzugsweise von wenigstens 20 Bildern/s, insbesondere von wenigstens 25 Bildern/s aufgenommen werden. Aus dieser Bilderschar werden nun zur Ermittlung der spezifischen Daten eines bestimmten Fahrzeugs diejenigen Bilder ausgewählt, in denen die Vorderkante und/oder die Hinterkante des Fahrzeugs sichtbar ist, wobei so viele Bilder ausgewählt werden, dass die Vorderkante bzw. die Hinterkante wenigstens zweimal abgebildet ist. D.h. es werden, wenn das Fahrzeug kürzer als die Breite des Fahrbahnabschnitts ist und das Fahrzeug in seiner Gesamtheit in den Bildern sichtbar ist, wenigstens zwei Bilder ausgewählt. Ist das Fahrzeug länger als der Fahrbahnabschnitt und mithin nicht zur Gänze in den Bildern gezeigt, werden wenigstens vier Bilder ausgewählt. Nachfolgend werden anhand der ausgewählten Bilder bildbezogene Positionsdaten der Vorder- und/oder der Hinterkante ermittelt, anhand welcher dann aufgrund der Aufnahme senkrecht zur Fahrbahn und damit zur Bewegungsrichtung der Fahrzeuge mit nur minimalem Fehler die Geschwindigkeit bzw. die Länge des Fahrzeugs ermittelt werden kann.

Der aufgenommene Fahrbahnabschnitt sollte eine Breite zwischen 3 m bis 12 m, insbesondere von ca. 5 m aufweisen. Abhängig von der Breite des Fahrbahnabschnitts und der Aufnahmerate der Bilder ergibt sich eine maximale Geschwindigkeit eines Fahrzeugs, die erfasst werden kann. Bei einer Aufnahmerate von 25 Bildern/s und einem 5 m breiten Fahrbahnausschnitt beträgt die maximal erfassbare Geschwindigkeit 225 km/h. Bei dieser Geschwindigkeit werden 2,5 m/s zurückgelegt, so dass bei einem 5 m breiten Fahrbahnabschnitt das Fahrzeug gerade noch zweimal mit seinen Kanten in den Bildern sichtbar ist. Selbstverständlich können die Aufnahmeraten und/oder die Breite des Fahrbahnabschnitts je nachdem variiert werden, wie groß die maximale erfassbare Geschwindigkeit sein soll.

In Weiterbildung der Erfindung kann vorgesehen sein, dass die Bilder zur Erfassung mehrerer Fahrbahnstreifen mittels einer in erhöhter Position angeordneten Aufnahmeeinrichtung aufgenommen werden. Die Aufnahmeeinrichtung - es wird hier vornehmlich eine digitale Kamera mit einem CCD-Aufnahmepanel mit ca. 600 x 480 Pixeln verwendet - sollte dabei so angeordnet werden, dass vermieden ist, dass ein größeres Fahrzeug ein dahinter stehendes kleineres Fahrzeug verdeckt. Bei einer Erfassung von drei nebeneinander liegenden Fahrbahnstreifen (zwei Fahrbahnen und ein Standstreifen) sollte die Aufnahmeeinrichtung wenigstens 12 m, insbesondere wenigstens 14 m hoch angeordnet sein, bei einer Erfassung von vier nebeneinander liegenden. Fahrbahnstreifen (drei Fahrbahnen und ein Standstreifen) sollte die Aufnahmeeinrichtung wenigstens 18 m, vorzugsweise wenigstens 20 m hoch positioniert sein. Hierzu sind entsprechende Masten zu verwenden. Die hohe Anordnung sowie die Aufnahme der Bilder rechtwinklig zur Fahrbahn sind neben der Vermeidung einer Abdeckung eines neben einem anderen Fahrzeug fahrenden Fahrzeugs dahingehend von Vorteil, dass ein Parallaxfehler, der aufgrund der Aufnahmegeometrie gegeben ist, sehr gering ist.

Die Bilder werden zweckmäßigerweise derart aufgenommen, dass sie einen im Wesentlichen rechteckigen Fahrbahnausschnitt zeigen. D.h., der Ausschnitt des Fahrstreifens, der näher zur Aufnahmeeinrichtung liegt, ist genauso breit wie der Ausschnitt eines Fahrstreifens, der zu ihr weiter entfernt liegt. Über das gesamte Bild wird also ein gleichmäßig breiter Fahrbahnausschnitt aufgenommen. Hierzu wird zweckmäßigerweise eine Aufnahmeeinrichtung mit einer vorgeschalteten optischen Rektifiziereinrichtung (z.B. Linse) verwendet, die die aufgrund der Aufnahme gegebene Aufweitung des Bildes kompensiert. Aber auch eine rechnerische Rektifizierung ist denkbar.

Zur Vereinfachung der Detektion der relevanten Kanten im Bild ist es vorteilhaft, wenn jedes aufgenommene Bild, zumindest aber jedes zur Ermittlung der Vorder- und der Hinterkante verwendete Bild vor seiner Verarbeitung im Rahmen einer Bildsubtraktion mit einem Hintergrundbild des Fahrbahnausschnitts verknüpft wird. Nach dieser Erfindungsausgestaltung wird also im Rahmen einer Bildsubtraktion ein Hintergrundbild, das den Bildhintergrund zeigt, subtrahiert, so dass im Subtraktionsbild lediglich noch die Bildinformation erhalten bleibt, die gegenüber dem Hintergrundbild verändert ist.

Aus der Schar der Bilder, die die Vorderkante und die Hinterkante zeigen, werden erfindungsgemäß diejenigen gewählt, in denen die jeweilige Kante am nächsten zur Bildmitte liegt. Diese Auswahl dient zur weiteren Verringerung des parallaxen Fehlers, da die jeweilige Kante umso weniger verzeichnet wird, je näher sie zur Bildmitte liegt.

Auf der Fahrbahn sind zweckmäßigerweise Referenzpunkte vorgesehen, die ebenfalls in jedem Bild gezeigt sind. Die Lage der Referenzpunkte im Bild wird im Rahmen der Ermittlung der fahrzeugspezifischen Daten berücksichtigt, wobei primär die Kantenposition im jeweiligen Bild unter Berücksichtigung der Referenzpunkte ermittelt wird. Diese Referenzpunkte, die im Idealfall bei stets gleicher Position der Aufnahmeeinrichtung stets an derselben Stelle im Bild sind, dienen auch dazu, etwaige beispielsweise windbedingte Schwankungen der an dem relativ hohen Mast angeordneten Aufnahmeeinrichtung kompensieren zu können, da wie gesagt die Ermittlung stets unter Bezug auf die Referenzpunkte erfolgt.

Die Positionsdaten der Vorder- und/oder der Hinterkante kann nach einer ersten Erfindungsausgestaltung in den Bildern und anhand der Bilder selbst ermittelt werden. Alternativ dazu besteht die Möglichkeit, dass die aufgenommenen und gegebenenfalls ausgewählten Bilder zur Erzeugung niedriger aufgelöster Arbeitsbilder verarbeitet werden, wobei die Ermittlung der Positionsdaten anhand der niedrig aufgelösten Bilder erfolgt. Innerhalb dieser niedriger aufgelösten Arbeitsbilder, die beispielsweise durch einfaches pixelbinning, also ein Zusammenfassen von Pixelbereichen (z.B. 5 x 5-Pixel werden zusammengefasst) erzeugt werden, sind weniger Bildinformationen im Rahmen der Kantendetektion zu verarbeiten, so dass eine Kantendetektion in diesen Bildern sehr schnell vonstatten gehen kann. In jedem Fall - egal ob die Kantendetektion in den originalen Bildern oder den niedriger aufgelösten Bildern erfolgt - wird ein bekannter Kantendetektionsalgorithmus zur Ermittlung eingesetzt.

Sofern die niedrig aufgelösten Arbeitsbilder verarbeitet werden, ist es auch hier zweckmäßig, mit einem entsprechend bemessenen bzw. aufgelösten Hintergrundbild im Rahmen einer Bildsubtraktion die niedrig aufgelösten Bilder zu verknüpfen.

In jedem Fall ist es vorteilhaft, wenn das Hintergrundbild oder das niedrig aufgelöste Hintergrundbild in Abständen unter Verwendung zeitlich früher aufgenommener Bilder oder zeitlich früher erzeugter Arbeitsbilder aktualisiert wird. Auf diese Weise ist es möglich, das Hinstergrundbild sich ändernden Lichtverhältnissen oder sich ändernder Witterung anzupassen, d.h. es wird tatsächlich der "aktuelle" Hintergrund subtrahiert.

Nach einer besonders zweckmäßigen Erfindungsausgestaltung ist vorgesehen, dass in den niedrig aufgelösten Bildern, gegebenenfalls nach Durchführung der Bildsubtraktion, die Vorder- und/oder die Hinterkante detektiert wird, wonach die Positionsdaten der jeweiligen Kanten im ursprünglich aufgenommenen Bild anhand der Detektionsergebnisse im niedrig aufgelösten Bild bestimmt werden. Dies hat den Vorteil, dass - nachdem die grobe Lage der jeweiligen Kanten aus dem niedrig aufgelösten Arbeitsbild bereits bekannt ist - innerhalb des Originalbilds lediglich noch ein kleinerer Bereich betrachtet wird, in dem dann die genaue Position und der Pixelort der jeweiligen Kante bestimmt wird. Dieses Verfahren ist schneller, da es insgesamt weniger Rechenzeit benötigt als eine reine Verarbeitung der Originalbilder.

Wie bereits beschrieben ist es zweckmäßig, wenn zur Erniedrigung der Auflösung Pixelbereiche von 5 x 5 Pixeln zusammengefasst und für diesen Bereich ein mittlerer Grauwert bestimmt wird.

Neben dem Verfahren betrifft die Erfindung ferner ein System zur Erfassung eines sich auf einer Fahrbahn, insbesondere einer Autobahn, bewegenden Fahrzeugs sowie zur Ermittlung fahrzeugspezifischer Daten, umfassend wenigstens eine Aufnahmeeinrichtung zur Aufnahme der Bilder sowie wenigstens eine Verarbeitungseinrichtung zum Verarbeiten der Bilder und zum Ermitteln der fahrzeugspezifischen Daten, wobei die Aufnahmeeinrichtung und die Verarbeitungseinrichtung zur Durchführung des Verfahrens der beschriebenen Art ausgebildet sind.

Weitere Vorteile, Merkmale und Einzelheiten der Erfindung ergeben sich aus den im folgenden beschriebenen Ausführungsbeispielen sowie anhand der Zeichnungen. Dabei zeigen:

Fig. 1    eine Prinzipskizze zur Darstellung der fahrbahnseitigen Anordnung des erfindungsgemäßen Systems,

Fig. 2    ein Flussdiagramm zur prinzipiellen Erläuterung des Ablaufs des erfindungsgemäßen Verfahrens,

Fig. 3    drei Bilder zur Darstellung des Bildsubtraktionsschritts zur Erzeugung eines Subtraktionsbilds, in dem eine relevante Kante detektiert wird,

Fig. 4    ein Arbeitsbild mit niedrigerer Auflösung, das den vorderen Bereich eines LKWs zeigt,

Fig. 5    ein Arbeitsbild mit niedrigerer Auflösung, das den hinteren Bereich des LKWs zeigt,

Fig. 6    eine Prinzipdarstellung zur Erläuterung der Ermittlung der relevanten fahrzeugspezifischen Parameter am Beispiel eines LKWs, und

Fig. 7    eine Prinzipdarstellung zur Erläuterung der Ermittlung der fahrzeugspezifischen Parameter betreffend einen PKW.

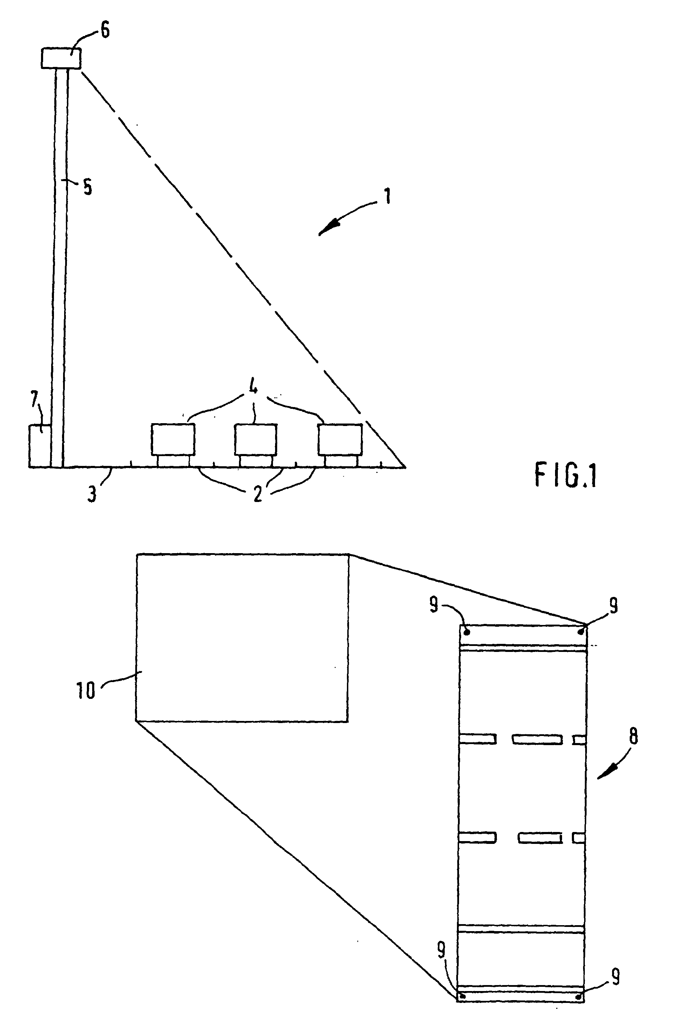

Fig. 1 zeigt in Form einer Prinzipdarstellung eine Fahrbahn 1 mit drei Fahrbahnstreifen 2 und einer Standspur 3. Auf jedem Fahrbahnstreifen 2 ist jeweils ein Fahrzeug 4 dargestellt.

Neben der Fahrbahn 1 ist ein Mast 5 vorgesehen, an dessen oberem Ende eine Aufnahmeeinrichtung 6 in Form einer digitalen Schwarz-Weiß-Kamera mit einer digitalen bemessenen Aufnahmeeinheit von ca. 600 x 480 Pixeln angeordnet ist. Es können natürlich auch andere Aufnahmeeinheiten verwendet werden. Zur vollständigen Erfassung der drei Fahrbahnstreifen, auf denen sich die Fahrzeuge 4 bewegen, ist im gezeigten Beispiel die Aufnahmeeinrichtung 6 in einer Höhe von rund 20 m angeordnet. Sind nur zwei Fahrbahnstreifen vorhanden, auf denen Fahrzeuge fahren, so ist eine Höhe von ca. 14 m ausreichend. Die Aufnahmeeinrichtung ist in einem nicht näher dargestellten Gehäuse angeordnet. Sie kommuniziert mit einer am Fuß des Masts vorgesehenen elektronischen Verarbeitungseinrichtung 7, in der eine geeignete Elektronik- und Recheneinrichtung zur Ermittlung sämtlicher relevanter Daten, auf die nachfolgend noch eingegangen wird, vorgesehen ist. Diese Verarbeitungseinrichtung 7 kommuniziert ihrerseits drahtlos oder kabelgebunden mit einer entfernten Steuer- oder Leitzentrale, an die die ermittelten Daten übertragen werden können, wo sie letztendlich ausgewertet werden können und beispielsweise im Falle von angeschlossenen Verkehrsleitsystemen entsprechende Maßnahmen ergriffen werden können.

Das Gehäuse der Aufnahmeeinrichtung 6 ist derart ausgebildet bzw. angebracht, dass die Aufnahmeeinrichtung und die erforderlichen Anschlüsse gegen äußere Einflüsse wie Blitzschlag oder dergleichen gesichert sind. Zweckmäßig ist es ferner, wenn entlang des Masts 5 eine Druckleitung vorgesehen wird, so dass bei Bedarf eine Reinigungsflüssigkeit und gegebenenfalls Pressluft auf das Sichtfenster des Gehäuses, hinter dem die Kamera ist, gespritzt oder geblasen werden kann, um das Sichtfenster zu reinigen.

Die Aufnahmeeinrichtung 6 ist derart angeordnet, dass sie Bilder senkrecht zur Fahrbahn 1 aufnimmt. Die Breite des aufgenommenen Fahrbahnausschnitts 8, der in Fig. 1 vergrößert herausgezeichnet ist, beträgt zwischen 3 m bis 12 m, vornehmlich sollte er ca. 5 m betragen. Die Aufnahmeeinrichtung 6 ist mit einer geeigneten Rektifiziereinrichtung, beispielsweise in Form einer Rektifizierlinse, versehen, die aufgrund der seitlichen und erhöhten Anordnung der Aufnahmeeinrichtung 6 resultierende Verzerrungen des aufgenommenen Fahrbahnausschnitts dahingehend korrigiert, dass der Fahrbahnausschnitt über seine gesamte Länge (bei drei Fahrbahnstreifen und einem Standstreifen beträgt die Länge ca. 15 m) überall mit der gleichen Breite aufgenommen werden kann.

Wie in der vergrößerten Ansicht des Fahrbahnausschnitts 8 gezeigt ist, sind Referenzpunkte 9 fahrbahnseitig vorgesehen, wobei wenigstens ein, vorzugsweise zwei Referenzpunkte stets im Bild zu sehen sein sollten. Über diese Referenzpunkte können zum einen etwaige Bewegungen der Aufnahmeeinrichtung 6, beispielsweise bei starkem Wind und dergleichen, erfasst und kompensiert und bei der Berechnung berücksichtigt werden, zum anderen dienen diese Referenzpunkte 9 zur späteren Ermittlung der relevanten Fahrzeugdaten.

Wie Fig. 1 ferner zeigt, wird der Fahrbahnausschnitt 8 in dem aufgenommenen Bild 10 mit der angegebenen Pixelauflösung von ca. 600 x 480 Pixeln abgebildet. Anhand dieser Bilder, die mit einer möglichst hohen Bildaufnahmerate von vorzugsweise 25 Bildern/s aufgenommen werden, erfolgt wie nachfolgend beschrieben die Ermittlung der relevanten Fahrzeugdaten. Die Aufnahmezeit wird zu jedem einzelnen Bild festgehalten, da auch diese für die Ermittlung der Daten relevant ist.

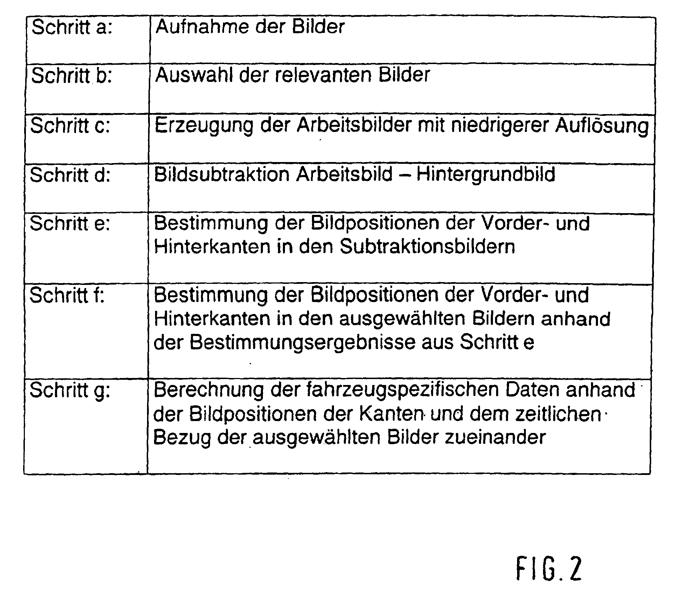

Fig. 2 zeigt in Form eines Flussdiagramms die wichtigsten verfahrensgemäßen Schritte zur Ermittlung der fahrzeugspezifischen Daten. Im Schritt a werden zunächst kontinuierlich die Bilder des Fahrbahnabschnitts aufgenommen, wobei die Bildaufnahme andauernd erfolgt, unabhängig davon, ob nun ein Fahrzeug gerade vorbeifährt oder nicht. Aus der kontinuierlich aufgenommenen Bilderschar werden im Schritt b seitens der Verarbeitungseinrichtung 7 diejenigen relevanten, kontinuierlich eingehenden Bilder ausgewählt, die zur Ermittlung der fahrzeugspezifischen Daten eines gerade vorbeifahrenden Fahrzeugs benötigt werden. Für jedes vorbeifahrende Fahrzeug, zu dem die relevanten Daten ermittelt werden sollen, ist es erforderlich, so viele Bilder auszuwählen, dass die Vorderkante sowie die Hinterkante des Fahrzeugs jeweils zweimal in den Bildern gezeigt ist. Die Ermittlung der Kanten ist wie nachfolgend noch beschrieben wird essentiell für das vorliegende Verfahren. Im Rahmen der Auswahl der relevanten Bilder sollte darauf geachtet werden, dass bei einer aufgenommenen Bilderschar von beispielsweise zehn Bildern, die ein vorbeifahrendes Fahrzeug in jeweils unterschiedlichen Positionen bezüglich der Kamera zeigen, diejenigen ausgewählt werden, in denen die Vorderkante und die Hinterkante jeweils am nächsten zur Bildmitte liegen, um auf diese Weise etwaige parallaxebedingte Fehler so klein wie möglich zuhalten.

Aus den ausgewählten relevanten Bildern, die die Kanten eines Fahrzeugs zeigen, werden nun durch geeignetes pixelbinning Arbeitsbilder mit niedriger Auflösung seitens der Verarbeitungseinrichtung 7 ermittelt. Dies erfolgt auf einfache Weise derart, dass jeweils Bildabschnitte mit beispielsweise 5 x 5 Pixeln zusammengefasst und aus den einzelnen pixelbezogenen Grauwerten ein Grauwert-Mittelwert errechnet wird, der im Arbeitsbild für diesen Pixelbereich angezeigt wird. Dies ist dahingehend zweckmäßig, als hierdurch die Datenmenge innerhalb des Arbeitsbilds, welches nachfolgend einer Kantendetektion unterzogen wird, deutlich verringert wird, so dass das gesamte Verfahren schneller vonstatten gehen kann.

Im Schritt d erfolgt eine Bildsubtraktion, innerhalb welcher vom Arbeitsbild ein die gleiche Auflösung aufweisendes Hintergrundbild subtrahiert wird. Das Hintergrundbild, das bereits zeitlich etwas früher aufgenommen oder anhand zeitlich früher aufgenommener Bilder erstellt wurde, zeigt lediglich die leere Fahrbahn ohne Fahrzeuge. Dieses Hintergrundbild wird nun von dem eigentlichen aufgenommenen bzw. ermittelten Arbeitsbild subtrahiert. Im Rahmen dieser Subtraktion wird anschließend bestimmt, ob ein im erhaltenen Subtraktionsbild enthaltener Bildbereich dem Hintergrund zugeordnet werden muss, oder ob es sich um ein Objekt handelt. Sämtliche objektbezogenen Bildbereiche werden anschließend schwarz dargestellt, die hintergrundbezogenen Bildbereiche grau, so dass im letztlich erhaltenen Subtraktionsbild lediglich schwarze und graue Bereiche gezeigt sind, wobei das Schwarze die Umrisse des aufgenommenen Fahrzeugs zeigt.

Anhand dieses Subtraktionsbilds wird nun im Schritt e die jeweilige Vorder- oder Hinterkante, je nachdem was gezeigt ist, mit einem geeigneten Kantendetektionsverfahren ermittelt. Derartige Kantendetektionsverfahren sind bekannt. Im Rahmen der Kantendetektion wird die pixelbezogene Lage der Vorder- oder Hinterkante des Fahrzeugs ermittelt, das heißt, es wird die Pixelposition im Arbeitsbild bestimmt, wo sich die Kante befindet. Berücksichtigt wird aber jeweils der vorderste Punkt der Kante, die gegebenenfalls leicht gerundet abgebildet sein kann. Da es sich um ein relativ niedrig aufgelöstes Arbeitsbild handelt, erfolgt hier nur eine Grobbestimmung der Kantenposition.

Im Schritt f wird nun anhand der grobbestimmten Kantenposition im Arbeitsbild eine genaue Bestimmung der Bildposition der Vorder- oder Hinterkante in den tatsächlich aufgenommenen Bildern vorgenommen. Nachdem bereits bekannt ist, wo sich die Kante ungefähr befindet, muss im eigentlich aufgenommenen, hochaufgelösten Bild nur ein relativ begrenzter Bildausschnitt mit dem Kantendetektionsverfahren zur Ermittlung der genauen Kantenposition untersucht werden. Nun erfolgt die exakte Bestimmung der Pixelposition der Kante. Dabei ist darauf hinzuweisen, dass lediglich die Pixelposition in x-Richtung im Bild zur Ermittlung der Daten benötigt wird, das heißt die Pixelposition bezogen auf die Fahrtrichtung des Fahrzeugs im Bild.

Im Schritt g erfolgt nun anhand der ermittelten Pixelposition unter Berücksichtigung der beispielsweise vier Bilder, in denen je zweimal die Vorder- und Hinterkante gezeigt ist bzw. den jeweiligen bildbezogenen Pixelpositionen der Kanten die eigentliche Berechnung der fahrzeugspezifischen Daten, nämlich der Geschwindigkeit des Fahrzeugs und seiner Länge. Auf den konkreten Berechnungsmodus wird nachfolgend noch eingegangen.

Die Auswahl der relevanten Bilder gemäß Schritt b kann unter Verwendung eines groben Auswahlmodus unter Verwendung eines sehr allgemeinen Detektionsalgorithmus erfolgen. Selbstverständlich besteht auch die Möglichkeit, nach Schritten zunächst die Schritte c - e und gegebenenfalls noch den Schritt f durchzuführen, und zwar bezogen auf alle aufgenommenen Bilder gemäß Schritt a, und erst anschließend, wenn also die tatsächlichen Pixelorte der möglicherweise gezeigten Kanten in den Bildern bekannt sind, diejenigen Bilder auszuwählen, die weiterverarbeitet werden sollen. Anhand des Pixelortes können dann beispielsweise genau diejenigen Bilder ausgewählt werden, bei denen die detektierte Kante tatsächlich möglichst nahe zur Bildmitte liegt.

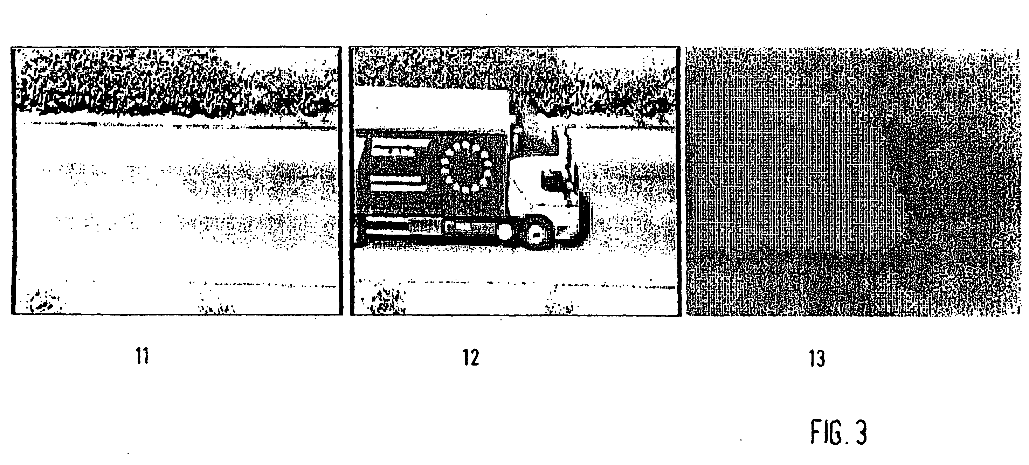

Fig. 3 zeigt exemplarisch die der Bildsubtraktion gemäß Schritt d zugrunde liegenden Bilder. Gezeigt ist ein Hintergrundbild 11, das den leeren aufgenommenen Fahrbahnausschnitt zeigt. Im gezeigten Beispiel sind hier zwei Fahrstreifen zu sehen, wobei die Breite des hier exemplarisch aufgenommenen Fahrbahnausschnitts ca. 10,5 m beträgt. Bild 12 zeigt ein zu einem späteren Zeitpunkt aufgenommenes Bild, das ein vorbeifahrendes Fahrzeug - hier ein LKW - zeigt. Sowohl das Hintergrundbild 11 als auch das Arbeitsbild 12 weisen bereits die niedrige Auflösung auf, das heißt, sie sind bereits vorverarbeitet. Vom Arbeitsbild 12 wird nun das Hintergrundbild 11 subtrahiert. Im Rahmen der Bildsubtraktion wird dann ermittelt, ob ein Teilbereich des Subtraktionsbilds dem Hintergrund zuzuordnen ist, oder ob es sich um ein Objekt handelt. Im Falle eines Hintergrundbereichs wird dieser im Subtraktionsbild 13 hellgrau dargestellt. Bereiche, die dem Objekt zuzuordnen sind, werden schwarz dargestellt. Im optimalen Fall sind lediglich die objektbezogenen schwarzen Bereiche im Subtraktionsbild 13 erkennbar. Für den Fall jedoch, dass "feste" Objekte wie beispielsweise Bäume oder Büsche oder dergleichen aufgrund einer Windbewegung oder dergleichen im Arbeitsbild 12 in etwas anderer Position als im Hintergrundbild 11 dargestellt sind, ergibt sich auch hier mitunter ein Subtraktionsergebnis, das zu einer schwarzen Darstellung dieses "festen" Objekts führt. Im Rahmen der Kantendetektion bleiben solche quasi fälschlicherweise mit dargestellten Objekte unberücksichtigt. Zur Bildsubtraktion kann auch ein Subtraktionsalgorithmus verwendet werden, der imstande ist, solche bewegungsbedingten Fehldarstellungen auszublenden. Beispielsweise kann zu jedem Pixelabschnitt innerhalb der zu verarbeitenden Bilder ein gewisser Toleranzbereich gerechnet werden, innerhalb welchem etwaige Unterschiede zwischen dem Hintergrundbild 11 und dem Arbeitsbild 12 liegen dürfen, so dass sie als quasi fehlerhafte bewegungsbedingte Erscheinung erkannt werden und zu einem Ausblenden führen.

Um die Leistungsfähigkeit der Verarbeitungseinrichtung noch zu steigern, besteht die Möglichkeit, diese als lernendes System zu konfigurieren, beispielsweise als neuronales Netz, als Fuzzy-Logik oder dergleichen. Ein solches System kann quasi trainiert werden, so dass derartige Fehldarstellungen von Haus aus unterbunden werden können. Auch kann mit einem solchen System gelernt werden, wie sich unterschiedliche Witterungsbedingungen auf das Hintergrundbild auswirken. Zwar wird das Hintergrundbild relativ häufig aktualisiert, um sich den ändernden Licht- und Witterungsverhältnissen anzupassen. Dennoch kann es vorkommen, dass sich diese schneller ändern, als das Hintergrundbild aktualisiert wird. Infolgedessen muss und kann das System auch lernen, wie der Fahrbahnausschnitt bei Trockenheit, Nässe, Schnee, Nebel etc. aussieht.

Anhand des Subtraktionsbilds 13 wird nun unter Verwendung des Kantendetektionsalgorithmus die Vorderkante des gezeigten LKWs ermittelt und der genaue Pixelort längs der x-Bildachse im vorverarbeiteten Arbeitsbild bestimmt. Anschließend erfolgt darauf basierend die genaue Positionsbestimmung im ursprünglich aufgenommenen Bild,

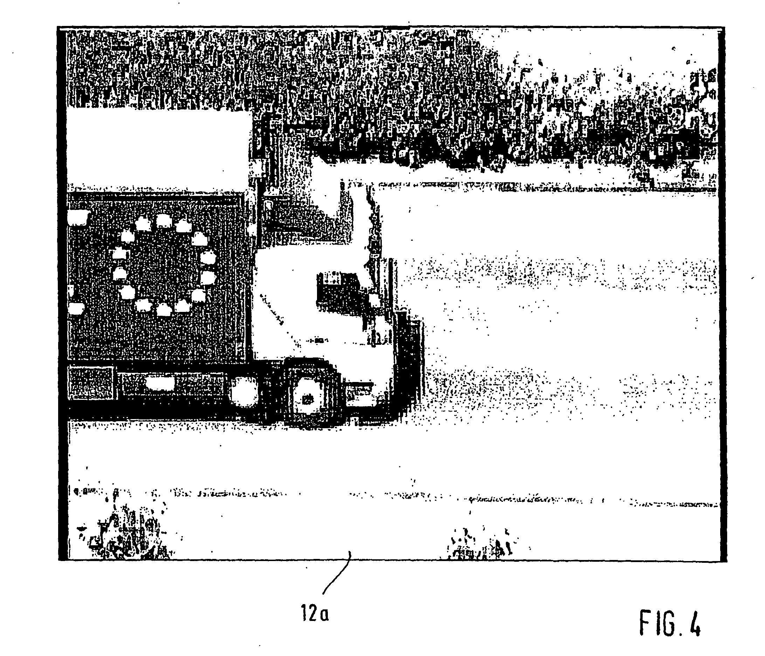

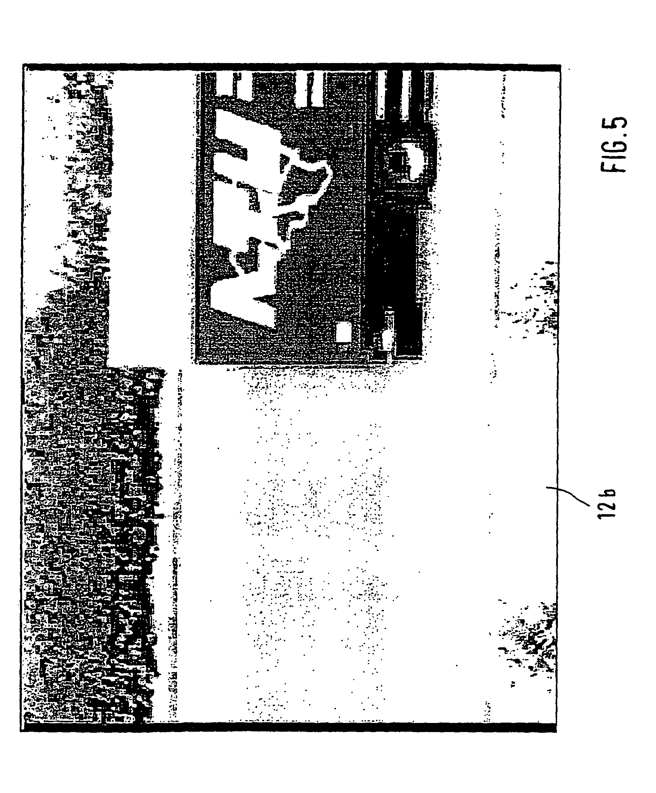

Die Fig. 4 und 5 zeigen schließlich exemplarisch zwei Arbeitsbilder 12a und 12b, die eine typische Fahrsituation darstellen. Ersichtlich wurden als Arbeitsbilder zwei Bilder ausgewählt, bei denen die Vorderkante (im Bild 12a) bzw. die Hinterkante (im Bild 12b) des gezeigten LKWs möglichst nahe zur Mitte des jeweiligen Bildes liegen. Exakt in der Bildmitte ist die Mitte der Aufnahmeeinrichtung, wo sie also genau senkrecht zur Fahrbahn steht bzw. das Bild aufnimmt. Hier ist der parallaxebedingte Fehler minimal bzw. gleich Null.

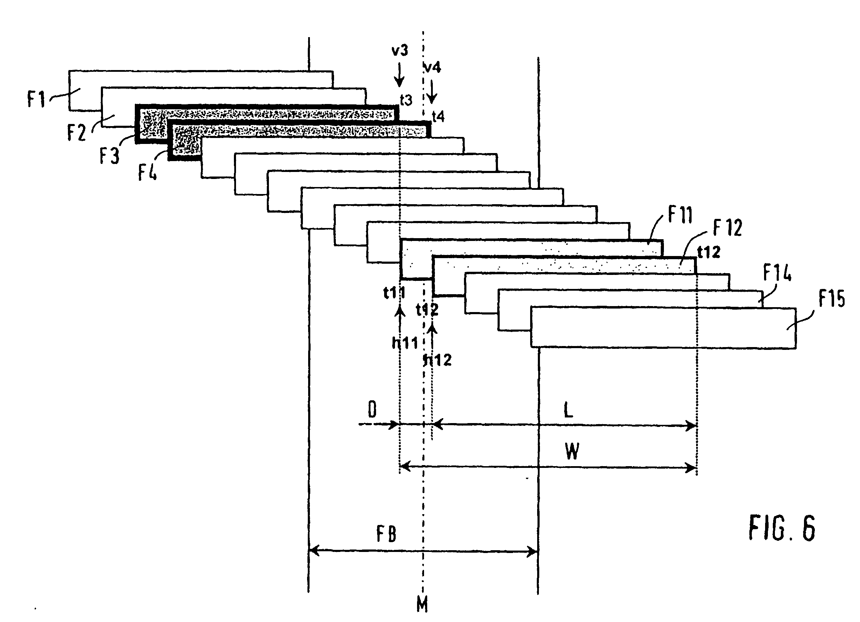

Fig. 6 zeigt nun in Form einer Prinzipdarstellung, wie die Geschwindigkeit und die Länge eines Fahrzeugs anhand der relevanten Daten bezüglich der Fahrzeugkanten ermittelt werden. Gezeigt sind exemplarisch lediglich die Umrisse eines Fahrzeugs in Form der einzelnen Rechtecke, wobei die Vorder- und Hinterkanten der jeweiligen Rechtecke die Vorder- und die Hinterkante eines Fahrzeugs angeben. Gezeigt sind insgesamt 15 Fahrzeugdarstellungen F1, F2 ... F15, die innerhalb der Fahrbahnbreite FB aufgenommen wurden. Bei dem gezeigten Fahrzeug handelt es sich um einen LKW, wie sich bereits aus der relativ kurzen zurückgelegten Distanz zwischen zwei gezeigten Fahrzeugdarstellungen ergibt. Die einzelnen Bilder wurden mit einer Aufnahmerate von 25 Bildern/s aufgenommen, das heißt, zwischen zwei Bildern bzw. entsprechend zwischen zwei Fahrzeugdarstellungen liegen jeweils 0,04 Sekunden.

Wie beschrieben werden im Rahmen der Ermittlung der tatsächlichen Kantenpositionen diejenigen Bilder ausgewählt, in denen die Vorder- und die Hinterkante möglichst nahe zur Bildmitte M liegen. Bezüglich der Vorderkante sind dies die Fahrzeugdarstellungen F3 und F4. Zu jeder Fahrzeugdarstellung F3, F4 wird die pixelbezogene Lage der Vorderkante ermittelt. Dies ist im gezeigten Beispiel v3 betreffend die Fahrzeugdarstellung F3 und v4 betreffend die Fahrzeugdarstellung F4. Die Aufnahmezeitpunkte der jeweiligen den Fahrzeugdarstellungen zugrunde liegenden Bilder sind t3 und t4, wie in Fig. 6 gezeigt.

Entsprechendes gilt betreffend die Fahrzeugdarstellungen F11 und F12, die jeweils die Hinterkante des Fahrzeugs zeigen. Die pixelbezogene Position der Hinterkanten sind h11 bezüglich der Fahrzeugdarstellung F11 und h12 bezüglich der Fahrzeugdarstellung F12, die jeweiligen Aufnahmezeitpunkte sind t11 und t12.

Anhand dieser Informationen kann nun die Geschwindigkeit der Vorderkante und die Geschwindigkeit der Hinterkante separat berechnet werden. Es gelten folgende Rechenregeln:

EP 1 306 824 B1

Geschwindigkeit Vorderkante: Sv = (v4 - v3)/(t4 - t3)

Geschwindigkeit Hinterkante: Sh = (h12 - h11) : (t12 - t11)

mittlere Geschwindigkeit: Sm = (Sv + Sh)/2

gefahrener Weg zwischen den entferntesten Fahrzeugdarstellungen F3 und F12: W = ((Sv + Sh)/2) x (t12 - t3)

Differenzstrecke zwischen Hinterkante h12 und Vorderkante v3: D = ((h12 - v3) /Pixelgesamtzahl) x 10,5

Länge Fahrzeug = Weg - Differenz: L = W - D

Beschleunigung des Fahrzeugs: B = (Sh - Sv) : (t12 - t4).

Nachfolgend wird anhand einer Beispielrechnung der obige Berechnungsmodus näher erläutert.
Es liegen folgende Annahmen zugrunde:
Breite des aufgenommenen Fahrbahnabschnittes: 10,5 m Pixelanzahl bezogen auf die Bildbreite: 609 Pixel Bildaufnahmewerte: 25 Bilder/s

| Pixelposition | Aufnahmezeitpunkt |
|---|---|
| v3 = 279 | t3 = 0,44 |
| v4 = 335 | t4 = 0,48 s |
| h11 = 276 | t11 = 0,88 s |
| h12 = 335 | t 12 = 0,92 s |

Die Pixelorte bezogen auf die x-Achse des Bilds wurden unter Berücksichtigung der Lage eines oder mehrerer Referenzpunkte ermittelt.
Hieraus ergibt sich Folgendes:

Geschwindigkeit Vorderkante:

$$Sv = (v4 - v3) / (t4 - t3)$$

$$= ( (335 - 279) / 609) \times 10,5 \text{ m} / (0,48 \text{ s} - 0,44 \text{ s})$$

$$= 24,138 \text{ m/s}$$

$$= 88,897 \text{ km/h}$$

Geschwindigkeit Hinterkante :

$$Sh = (h12 - h11) / (t12 - t11)$$

$$= ( (335 - 276) / 609) \times 10,5 \text{ m} / (0,92 \text{ s} - 0,88 \text{ s})$$

$$= 25,431 \text{ m/s}$$

$$= 91,552 \text{ km/h}$$

mittlere Geschwindigkeit:

$$Sm = (Sv + Sh) / 2$$

$$= 24,138 \text{ m/s} + 25,431 \text{ m/s}) / 2$$

7

$$= 24{,}785 \text{ m/s}$$

$$= 89{,}224 \text{ km/h}$$

Beschleunigung:

$$B = (Sh - Sv) / (t12 - t4)$$

$$= (25{,}431 \text{ m/s} - 24{,}138 \text{ m/s}) / (0{,}92 \text{ s} - 0{,}48 \text{ s})$$

$$= 2{,}939 \text{ m/s}^2$$

zurückgelegter Weg:

$$W = ((Sv + Sh) / 2) \times (t12 - t3)$$

$$= ((24{,}138 \text{ m/s} + 25{,}431 \text{ m/s}) / 2) \times (0{,}92 \text{ s} - 0{,}49 \text{ s})$$

$$= 11{,}897 \text{ m}$$

Differenzstrecke:

$$D = ((h12 - v3) / \text{Pixelanzahl}) \times \text{Breite Fahrbahnausschnitt}$$

$$= ((335 - 279) / 609) \times 10{,}5 \text{ m}$$

$$= 0{,}966 \text{ m}$$

Länge des Fahrzeugs:

$$L = W - D$$

$$= 11{,}897 - 0{,}966$$

$$= 10{,}931 \text{ m.}$$

Ersichtlich ergibt sich aufgrund der erfindungsgemäßen Gesamtbetrachtung der jeweils aufgenommenen Bilder und der aus ihnen ermittelten relevanten kantenspezifischen Daten eine exakte Ermittlung der tatsächlich gefahrenen Geschwindigkeit sowie der Beschleunigung und der Länge des Fahrzeugs.

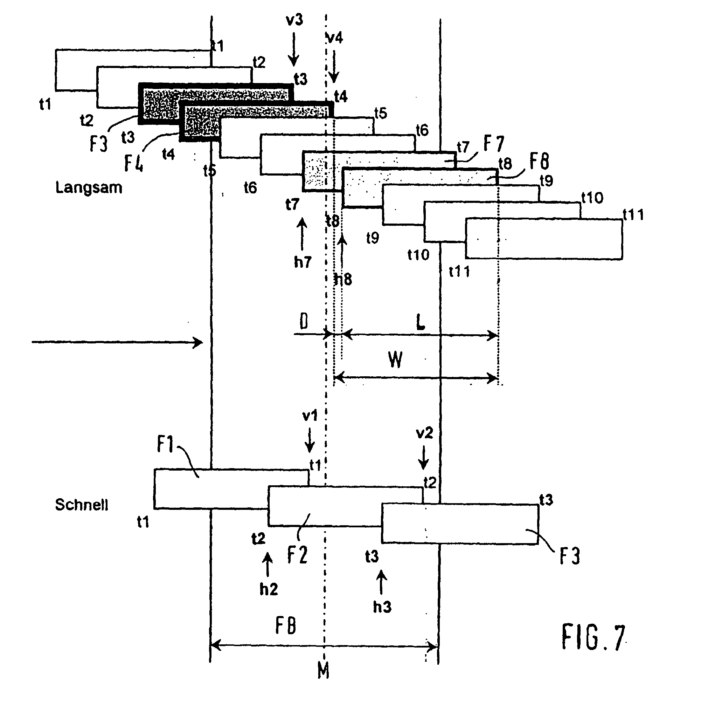

Fig. 7 zeigt ein entsprechendes Schema betreffend einen PKW mit einer Länge von weniger als 5 m, wobei bei diesem Ausführungsbeispiel die Breite des Fahrbahnausschnitts 5 m beträgt.

Im oberen Bildabschnitt ist die Situation bzw. Abfolge der aufgenommenen Bilder bzw. Fahrzeugdarstellungen für ein relativ langsam fahrendes Fahrzeug gezeigt. Hier werden insgesamt elf einzelne Bilder bzw. Fahrzeugdarstellungen während der Durchfahrt durch den 5 m breiten Fahrbahnabschnitt FB erhalten. Demgegenüber wird im unteren Bildabschnitt die Situation eines schnell fahrenden PKWs dargestellt. Hier werden nur drei Bilder bzw. Fahrzeugdarstellungen während der Durchfahrt des Fahrzeugs aufgenommen.

Als relevante und der Datenermittlung zu Grunde zu legende Fahrzeugdarstellungen sind im oberen Beispiel die Fahrzeugdarstellungen F3 und F4 betreffend die Vorderkante und F7 und F8 betreffend die Hinterkante zu wählen. Im unteren Ausführungsbeispiel sind zur Bestimmung der Vorderkante die Fahrzeugdarstellungen F1 und F2 und für die Ermittlung der Hinterkante die Fahrzeugdarstellungen F2 und F3 zu verwenden.

**EP 1 306 824 B1**

**Patentansprüche**

1. Verfahren zur Erfassung eines sich auf einer Fahrbahn, insbesondere einer Autobahn, bewegenden Fahrzeugs sowie zur Ermittlung fahrzeugspezifischer Daten, umfassend folgende Schritte:

   - Aufnahme mehrerer zeitbezogener, aufeinander folgender Bilder (F1 - F15) eines Fahrbahnausschnitts, die jeweils denselben begrenzten Fahrbahnausschnitt zeigen, mittels einer Bildaufnahmeeinrichtung (6) aus einer Richtung senkrecht zur Fahrbahn (1),
   - Auswahl derjenigen Bilder (F3, F4, F11, F12 bzw. F3, F4, F7, F8), in denen die Vorderkante (v3, v4) und/oder die Hinterkante (h11, h12 bzw. h7, h8) eines Fahrzeugs gezeigt ist, wobei aus der Schar der Bilder, die die Vorderkante und die Hinterkante zeigen, diejenigen gewählt werden, in denen die jeweilige Kante am nächsten zur Bildmitte (M) liegt, und wobei so viele Bilder ausgewählt werden, dass die Vorderkante (v3, v4) und/oder die Hinterkante (h11, h12 bzw. h7, h8) wenigstens zweimal in den Bildern abgebildet ist,
   - Ermittlung bildbezogener Positionsdaten der Vorderkante (v3, v4) und/oder der Hinterkante (h11, h12 bzw. h7, h8) anhand der jeweiligen Bilder, und
   - Ermittlung der Geschwindigkeit des Fahrzeugs und/oder der Länge des Fahrzeugs anhand der Positionsdaten der Vorderkante oder der Hinterkante sowie der zeitbezogenen Daten der verwendeten Bilder.

2. Verfahren nach Anspruch 1, **dadurch gekennzeichnet, dass** die Bilder (F1 - F15) mit einer Aufnahmerate von wenigstens 20 Bildern/s, insbesondere von wenigstens 25 Bildern/s, aufgenommen werden.

3. Verfahren nach Anspruch 1 oder 2, **dadurch gekennzeichnet, dass** ein 3 m bis 12 m, insbesondere 5 m, breiter Fahrbahnausschnitt (8) aufgenommen wird.

4. Verfahren nach einem der vorangehenden Ansprüche, **dadurch gekennzeichnet, dass** die Aufnahmeeinrichtung (6) zur Erfassung mehrerer Fahrbahnstreifen (2) in erhöhter Position angeordnet ist.

5. Verfahren nach Anspruch 4, **dadurch gekennzeichnet, dass** zur Erfassung von drei nebeneinander liegenden Fahrbahnstreifen (2) die Aufnahmeeinrichtung (6) wenigstens 12 m, insbesondere wenigstens 14 m, hoch angeordnet ist, und dass zur Erfassung von vier nebeneinander liegenden Fahrbahnstreifen (2) die wenigstens 18 Aufnahmeeinrichtung (6), insbesondere wenigstens 20 m, hoch angeordnet ist.

6. Verfahren nach Anspruch 4 oder 5, **dadurch gekennzeichnet, dass** die Bilder derart aufgenommen werden, dass sie einen im Wesentlichen rechteckigen Fahrbahnausschnitt(8) zeigen.

7. Verfahren nach Anspruch 6, **dadurch gekennzeichnet, dass** eine Aufnahmeeinrichtung (6) mit einer vorgeschalteten Rektifiziereinrichtung verwendet wird.

8. Verfahren nach einem der vorangehenden Ansprüche, **dadurch gekennzeichnet, dass** jedes aufgenommene Bild (F1 - F15, 12), zumindest aber jedes zur Ermittlung der Vorder- und der Hinterkante verwendete Bild (F3, F4, F11, F12 bzw. F3, F4, F7, F8, 12), vor seiner Verarbeitung im Rahmen einer Bildsubtraktion mit einem Hintergrundbild (11) des Fahrbahnausschnitts (8) verknüpft wird.

9. Verfahren nach einem der vorangehenden Ansprüche, **dadurch gekennzeichnet, dass** in jedem Bild auf der Fahrbahn vorgesehene Referenzpunkte (9) gezeigt sind, wobei die Lage der Referenzpunkte (9) im Bild bei der Ermittlung der fahrzeugspezifischen Daten berücksichtigt wird.

10. Verfahren nach einem der vorangehenden Ansprüche, **dadurch gekennzeichnet, dass** die Positionsdaten der Vorder- und/oder Hinterkante (v3, v4, h11, h12 bzw. v3, v4, h7, h8) in den Bildern (F3, F4, F11, F12 bzw. F3, F4, F7, F8) und anhand der Bilder selbst ermittelt werden.

11. Verfahren nach einem der Ansprüche 1 bis 9, **dadurch gekennzeichnet, dass** die aufgenommenen und gegebenenfalls ausgewählten Bilder zur Erzeugung niedrig aufgelöster Arbeitsbilder(12a, 12b) verarbeitet werden, wobei die Ermittlung der Positionsdaten anhand der niedrig aufgelösten Bilder (12a, 12b) erfolgt.

12. Verfahren nach Anspruch 11, **dadurch gekennzeichnet, dass** die niedrig aufgelösten Arbeitsbilder (12a, 12b) mit einem entsprechend bemessenen oder aufgelösten Hintergrundbild (11) im Rahmen einer Bildsubtraktion verknüpft werden.

**13.** Verfahren nach Anspruch 1, **dadurch gekennzeichnet, dass** das Hintergrundbild (11) oder das niedrig aufgelöste Hintergrundbild in Abständen unter Verwendung zeitlich früher aufgenommener Bilder oder zeitlich früher erzeugter Arbeitsbilder aktualisiert wird.

**14.** Verfahren nach einem der Ansprüche 11 bis 13, **dadurch gekennzeichnet, dass** in den niedrig aufgelösten Bildern, gegebenenfalls nach Durchführung der Bildsubtraktion, die Vorder- und/oder die Hinterkante detektiert wird, wonach die Positionsdaten der jeweiligen Kante im ursprünglich aufgenommenen Bild anhand des Detektionsergebnisses bestimmt werden.

**15.** Verfahren nach einem der Ansprüche 11 bis 14, **dadurch gekennzeichnet, dass** zur Erniedrigung der Auflösung Pixelbereiche von 5 x 5 Pixeln zusammengefasst und für diesen Bereich ein mittlerer Grauwert bestimmt werden.

**16.** System zur Erfassung eines sich auf einer Fahrbahn, insbesondere einer Autobahn bewegenden Fahrzeugs sowie zur Ermittlung fahrzeugspezifischer Daten, umfassend wenigstens eine Aufnahmeeinrichtung (6) zur Aufnahme der Bilder sowie wenigstens eine Verarbeitungseinrichtung (7) zum Verarbeiten der Bilder und zum Ermitteln der fahrzeugspezifischen Daten, wobei die Aufnahmeeinrichtung und die Verarbeitungseinrichtung zur Durchführung des Verfahrens nach einem der Ansprüche 1 bis 15 ausgebildet sind.

**Claims**

**1.** Method for detecting a vehicle moving on a roadway, in particular a motorway, and for acquiring vehicle-specific data, comprising the following steps:

- a plurality of time-related successive images (F1 - F15) of a part of the motorway which each show the same limited part of the motorway is recorded by means of an image recording device (6) from a direction perpendicular to the roadway (1),
- those images (F3, F4, F11, F12 and F3, F4, F7, F8) in which the front edge (v3, v4) and/or the rear edge (h11, h12 and h7, h8) of a vehicle are/is shown are selected, and from the group of images which show the front edge and the rear edge those images in which the respective edge is closest to the centre (M) of the image are selected and so many images are selected that the front edge (v3, v4) and/or the rear edge (h11, h12 and h7, h8) is represented at least twice in the images,
- image-related position data of the front edge (v3, v4) and/or of the rear edge (h11, h12 and h7, h8) is acquired by means of the respective images, and
- the speed of the vehicle and/or the length of the vehicle are/is acquired by means of the position data of the front edge or the rear edge and the time-related data of the images used.

**2.** Method according to Claim 1, **characterized in that** the images (F1 - F15) are recorded with a recording rate of at least 20 images/sec., in particular of at least 25 images/sec.

**3.** Method according to Claim 1 or 2, **characterized in that** a part (8) of a roadway which is 3 m to 12 m, in particular 5 m wide is recorded.

**4.** Method according to one of the preceding claims, **characterized in that** the recording device (6) for detecting a plurality of strips (2) of roadway is arranged in an elevated position.

**5.** Method according to Claim 4, **characterized in that**, in order to detect three strips (2) of roadway which lie one next to the other, the recording device (6) is arranged at a height of at least 12 m, in particular at least 14 m, and **in that**, in order to detect four strips (2) of roadway which lie one next to the other, the recording device (6) is arranged at a height of at least 18 m, in particular at least 20 m.

**6.** Method according to Claim 4 or 5, **characterized in that** the images are recorded in such a way that they show an essentially rectangular part (8) of the roadway.

**7.** Method according to Claim 6, **characterized in that** a recording device (6) with a rectifying device connected upstream is used.

**8.** Method according to one of the preceding claims, **characterized in that** each recorded image (F1 - F15, 12), or at least each image (F3, F4, F11, F12 and F3, F4, F7, F8, F12) which is used to acquire the front edge and the rear edge, is linked to a background image (11) of the part (8) of roadway before said image is processed within the scope of an image subtraction.

9. Method according to one of the preceding claims, **characterized in that** reference points (9) which are provided on the roadway are shown in each image, the position of the reference points (9) in the image being taken into account in the acquisition of the vehicle-specific data.

10. Method according to one of the preceding claims, **characterized in that** the position data of the front edge and/ or rear edge (v3, v4, h11, h12 and v3, v4, h7, h8) are acquired in the images (F3, F4, F11, F12 and F3, F4, F7, F8) and by means of the images themselves.

11. Method according to one of Claims 1 to 9, **characterized in that** the recorded, and possibly selected images are processed in order to generate low-resolution working images (12, 12b), the position data being acquired by means of the low-resolution images (12a, 12b).

12. Method according to Claim 11, **characterized in that** the low-resolution working images (12a, 12b) are linked to a background image (11) with corresponding dimensions or resolution, within the scope of an image subtraction.

13. Method according to Claim 12, **characterized in that** the background image (11) or the low-resolution background image is updated at intervals using images recorded earlier or working images which have been generated earlier.

14. Method according to one of Claims 11 to 13, **characterized in that** the front edge and/or the rear edge is detected in the low-resolution images, possibly after the image subtraction has been carried out, after which the position data of the respective edge is determined in the originally recorded image by means of the detection result.

15. Method according to one of Claims 11 to 14, **characterized in that** pixel regions of 5 x 5 pixels are combined in order to reduce the resolution and an average grey value is determined for this region.

16. System for detecting a vehicle moving on a roadway, in particular a motorway, and for acquiring vehicle-specific data, comprising at least one recording device (6) for recording the images, and at least one processing device (7) for processing the images and for acquiring the vehicle-specific data, the recording device and the processing device being , designed to carry out the method according to one of Claims 1 to 15.

## Revendications

1. Procédé pour détecter un véhicule qui se déplace sur une voie, en particulier sur une autoroute, comprenant les étapes suivantes :

   - à l'aide d'une installation de prise de vue (6) depuis une direction perpendiculaire à la voie (1), prendre sur une section de voie plusieurs images (F1 à F15) successives dans le temps qui montrent chacune la même section de voie limitée,
   - sélectionner les images (F3, F4, F11, F12 ou F3, F4, F7, F8) sur lesquelles on voit le bord avant (v3, v4) et/ ou le bord arrière (h11, h12 ou h7, h8) d'un véhicule; parmi l'ensemble d'images qui montrent le bord avant et le bord arrière, on sélectionne celles sur lesquelles le bord concemé est le plus proche du milieu de l'image (M) et on sélectionne des images en nombre suffisant pour que le bord avant (v3, v4) et/ou le bord arrière (h11, h12 ou h7, h8) soit reproduit au moins deux fois sur les images,
   - déterminer des données de position - en se référant aux images - du bord avant (v3, v4) et/ou du bord arrière (h11, h12 ou h7, h8) à l'aide des images respectives et

   déterminer la vitesse du véhicule et/ou la longueur du véhicule à l'aide des données de position du bord avant ou du bord arrière ainsi que des données dans le temps concernant les images utilisées.

2. Procédé selon la revendication 1, **caractérisé en ce que** les images (F1 à F15) sont prises selon une fréquence de prise de vue d'au moins 20 images/s, en particulier d'au moins 25 images/s.

3. Procédé selon la revendication 1 ou 2, **caractérisé en ce qu'**on enregistre une section de voie (8) dont la largeur est comprise entre 3 m et 12 m, en particulier de 5 m.

**4.** Procédé selon l'une des revendications précédentes, **caractérisé en ce que** l'installation de prise de vue (6) destinée à enregistrer plusieurs bandes de circulation (2) est placée en hauteur.

**5.** Procédé selon la revendication 4, **caractérisé en ce que** pour enregistrer trois bandes de circulation (2) juxtaposées l'installation de prise de vue (6) est placée à une hauteur d'au moins 12 m, en particulier d'au moins 14 m, et que pour enregistrer quatre bandes de circulation (2) juxtaposées l'installation de prise de vue (6) est placée à une hauteur d'au moins 18 m, en particulier d'au moins 20 m.

**6.** Procédé selon la revendication 4 ou 5, **caractérisé en ce que** les images sont prises de telle manière qu'elles montrent une section de voie (8) pratiquement rectangulaire.

**7.** Procédé selon la revendication 6, **caractérisé en ce qu'**on utilise une installation de prise de vue (6) comportant une installation de rectification placée en amont.

**8.** Procédé selon l'une des revendications précédentes, **caractérisé en ce que** chaque image prise (F1 à F15, 12), mais au moins chaque image (F3, F4, F12 ou F3, F4, F7, F8, F12) utilisée pour établir le bord avant et le bord arrière, est liée à une image d'arrière-plan (11) de la section de voie (8) avant qu'elle soit traitée dans le cadre d'une soustraction d'image.

**9.** Procédé selon l'une des revendications précédentes, **caractérisé en ce que** dans chaque image on montre des points de référence (9) prévus sur la voie ; on tient alors compte de la position des points de référence (9) sur l'image lorsqu'on établit les données spécifiques au véhicule.

**10.** Procédé selon l'une des revendications précédentes, **caractérisé en ce que** les données de position du bord avant et/ou du bord arrière (v3, v4, h11, h12 ou v3, v4, h7, h8) sont établies sur les images (F3, F4, F11, F12 ou F3 ; F4, F7, F8) et à l'aide des images elles-mêmes.

**11.** Procédé selon l'une des revendications 1 à 9, **caractérisé en ce que** les images prises et éventuellement sélectionnées sont traitées pour produire des images de travail (12a, 12b) à basse résolution, les données de position étant établies à l'aide des images (12a, 12b) à basse résolution.

**12.** Procédé selon la revendication 11, **caractérisé en ce que** les images (12a, 12b) à basse résolution sont liées à une image d'arrière-plan (11) mesurée ou résolue de façon correspondante dans le cadre d'une soustraction d'image.

**13.** Procédé selon la revendication 12, **caractérisé en ce que** l'image d'arrière-plan (11) ou l'image d'arrière-plan à basse résolution est mise à jour périodiquement en utilisant des images prises auparavant ou des images de travail prises auparavant.

**14.** Procédé selon l'une des revendications 11 à 13, **caractérisé en ce que**, sur les images à basse résolution, éventuellement après avoir effectué la soustraction d'image, on détecte le bord avant et/ou le bord arrière, après quoi on détermine les données de position du bord en question sur l'image prise à l'origine à l'aide du résultat de la détection.

**15.** Procédé selon l'une des revendications 11 à 14, **caractérisé en ce que**, pour réduire la résolution, on rassemble des zones de 5 x 5 pixels et on détermine une valeur de gris moyenne pour ces zones.

**16.** Système pour enregistrer un véhicule qui se déplace sur une voie, en particulier sur une autoroute, ainsi que pour déterminer des données spécifiques au véhicule; il comprend au moins une installation de prise de vue (6) destinée à prendre les images ainsi qu'au moins une installation de traitement (7) destinée à traiter les images et à déterminer les données spécifiques au véhicule, l'installation de prise de vue et l'installation de traitement étant conçues pour exécuter le procédé selon l'une des revendications 1 à 15.

FIG.1

| Schritt a: | Aufnahme der Bilder |
|---|---|
| Schritt b: | Auswahl der relevanten Bilder |
| Schritt c: | Erzeugung der Arbeitsbilder mit niedrigerer Auflösung |
| Schritt d: | Bildsubtraktion Arbeitsbild – Hintergrundbild |
| Schritt e: | Bestimmung der Bildpositionen der Vorder- und Hinterkanten in den Subtraktionsbildern |
| Schritt f: | Bestimmung der Bildpositionen der Vorder- und Hinterkanten in den ausgewählten Bildern anhand der Bestimmungsergebnisse aus Schritt e |
| Schritt g: | Berechnung der fahrzeugspezifischen Daten anhand der Bildpositionen der Kanten und dem zeitlichen Bezug der ausgewählten Bilder zueinander |

FIG. 2

FIG. 3

FIG. 4

12a

FIG.5

12 b

FIG. 6

FIG.7